# EUROPEAN PATENT SPECIFICATION

(11) **EP 0 504 089 B1**
(45) Date of publication and mention of the grant of the patent: **11.01.1995**
(21) Application number: 92500020.0
(22) Date of filing: 06.03.1992
(51) Int. Cl.: A01G 1/00, E02D 17/20

(54) **Method and mixture of organic-vegetal coating on surface without a fertile bed**
Verfahren zur Beschichtung einer Oberfläche ohne Fruchtbarschicht mit einer Schicht von organisch-pflanzlichem Material
Méthode pour le revêtement d'une surface sans lit fertile avec une couche organo-végétale

(30) Priority: 06.03.1991 ES 9100568
(43) Date of publication of application: 16.09.1992
(73) Proprietor: Aramburu Arbelaiz, Melchor, E-20013 Oyarzun (Guipuzcoa) (ES)
(72) Inventor: Aramburu Arbelaiz, Melchor, E-20013 Oyarzun (Guipuzcoa) (ES)
(74) Representative: Urizar Anasagasti, José Antonio

(56) References cited:
- PATENT ABSTRACTS OF JAPAN vol. 8, no. 224 (M-331)(1661) 13 October 1984
- PATENT ABSTRACTS OF JAPAN vol. 6, no. 224 (M-170)(1102) 9 November 1982
- PATENT ABSTRACTS OF JAPAN vol. 8, no. 224 (M-337)(1681) 9 November 1984
- PATENT ABSTRACTS OF JAPAN vol. 10, no. 193 (M-496)(2249) 8 July 1986

## Description

### OBJECT OF THE INVENTION

As is expressed in the title of this specification, the present invention refers to a method of organic-vegetal coating on surfaces without a fertile bed, whose purpose is to set a vegetal layer on any type of slope, according to the climatology of the surroundings and taking into account, in each case, the degree of setting of said layer in terms of the incline of the slope itself, even being able to be applied to vertical walls.

### BACKGROUND OF THE INVENTION

The carrying out of public works to improve the highway infrastructure is necessary for any society. However, they often cause important visual impacts on landscapes, in such a way that the reduction of visual and environmental impacts is stricter and stricter in Europe in the EEC legislation on environmental protection and in complementary national and regional legislation.

Consequently, the evaluations of the environmental impact and plans for restoration thereof are required in any new work and recommended to be applied to works already carried out.

To this effect, the making of a trench involves the disappearance of the vegetal layer coating and implies occurrence of some slopes, which due to their petrological characteristics does not permit hydro-sowing techniques to be applied upon them.

### DESCRIPTION OF THE INVENTION

The method of the invention foresees the coating of a surface without vegetal coating and an absolutely sterile surface in order to implant hydro-sowing systems, based on an organic-vegetal layer. It can be applied to slopes with a gradient that goes from 45 to 90 degrees, irrespective of the geological constitution of the surface to be coated.

Therefore, the method of the invention provides a technical solution that makes it possible to regenerate to a large degree the ecosystem, restoring the abiotic factors (soil-water) that human action has previously altered. The invention encompasses a method and a mixture according to claims 1 and 6 respectively. Vegetal seeds may be added according to claims 2 and 3.

The coating is obtained by means of a proportioned mixtured of products that is projected towards the surface to be coated, with the particular feature that the products involved are the following:
- Topsoil obtained in the carrying out the same work itself or an adjacent work, conveniently stored for reuse thereof.
- Slag obtained in an electric furnace and with a predominantly basic composition, with a calcium carbonate content higher than 10 % and with a granulometry between 12 and 20 mm.
- Portland cement type III-1/35
- River gravel pit boulder stone with a granulometry less than 20 mm
- Limey aggregate from a quarry and with a granulometry of 12 to 25 mm.
- Porespan ground to a granulometry less than 8 mm.
- Pulp cellulose, obtained from paper stuff
- Dramix (trade mark) in its metal as well as plastic version
The intimate and proportioned mixture of these products is obtained by means of some mechanical equipment that includes a motor-operated chain mill; a vertical shaft motor-operated mixer; a motor-operated guniting machine fed for impulsion by a compressor; a compressor; a generator; a feed hopper; conveyor belts; a proportioning hopper with its corresponding feeder and complementary loading and conveying material.

In short, the operative process or method is based on the use of a pneumatic conveyance system by means of a rubber hose, defined as guniting and its efficacy as a conveyor and projector being widely demonstrated, in such a way that based on what has been described the novelty of the method of the invention consists of feeding the guniting machine with some products simultaneously containing enough stability and capacity to be located on a vertical wall in thicknesses up to 50 mm., with the guarantee of setting and while in turn the layer has in its structure the biotopical capacity to permit the growing of seeds which in their development make it possible to coat the slope object of vegetation treatment.

To carry out these operations, at the work site one has the above cited mechanical equipment, in such a way that in the first place and once the necessary components have been defined, they are proportioned in volume and poured into the proportioning hopper, in which by means of a vibrating feeder they are passed to a conveyor belt. In this first step, a laminate mixture is carried out in the feeder, said conveyor belt pouring all of the product into a mill in whose chamber an intimate mixture of all the components is produced, so that once said mixture is homogenized it is conveyed by means of another conveyor belt up to the guniting machine, from which it is projected on the wall to be coated.

Although the coating process is applicable to the public works sector, it can likewise be applicable to other sectors.

As to the proportions of the most basic products of the mixture, the one which is capable of varying is cement, of which 80, 160 or 225 kg. may be used per 1,500 kg. of topsoil, 1000 kg of gravel and 20 kg. of ground spongy material, in such a way that in the first case the mixture will be used on surfaces with a specific incline, while the second case is used when the direction of the stratification plane is perpendicular or convergent to the plane of the slope, or else when said stratification plane coincides with the slope or is parallel to the same, in which case after projecting the coating a 12 mm. metal mesh is placed solidly upon the coating with bolts. In the third case, in other words, when the amount of cement in the mixture is 225 kg., more vertical slopes will be used, always placing a double mesh separated by 20 mm. will be put in place by means of some bushing spaced with a reticulation of 1 x 1 and attached to the slope by means of bolts.

In order to complement the description that is made hereinafter and for the purpose of providing a better understanding of the features of the invention, the present specification is accompanied by a single sheet of diagrams in whose drawings the features and advantages of the coating method object of the invention will be more easily understood.

### BRIEF DESCRIPTION OF THE DRAWINGS

Figure 1.- It shows a schematic representation, according to a side raised view which can be considered as a shop view to carry out the mixing of the products that are going to comprise the coating layer.

Figure 2.- It shows another schematic and side raised view of the application of way of implanting the vegetal layer on rocky slopes, by means of projecting the mixture obtained according to the scheme represented in the above figure.

### DESCRIPTION OF A PREFERRED EMBODIMENT

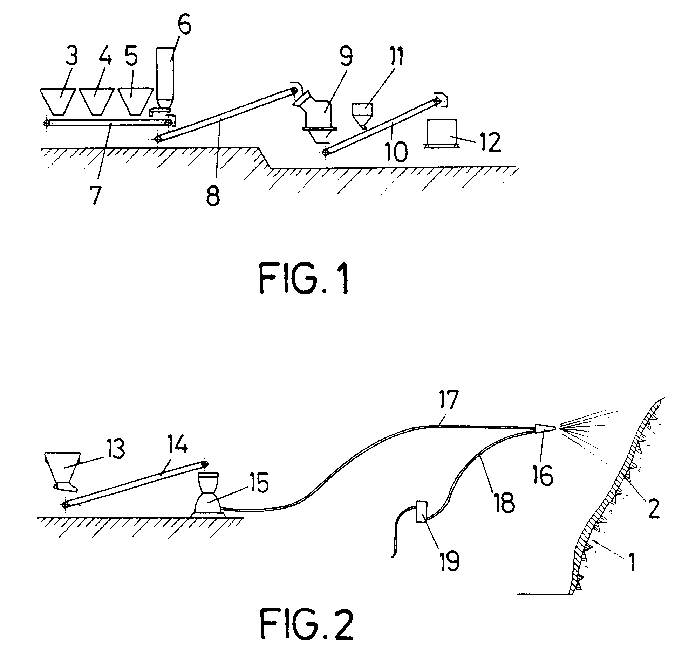

As it has been said above, the method of the invention is foreseen to coat a surface without a vegetal coating which is absolutely sterile for the implanting of hydro-sowing systems, it being able to be applied on slopes (1) as represented in figure 2, which is a rocky slope, with a gradient that goes from 45 to 90 degrees, the coating consisting of a vegetal layer (2) in accordance with the climatology of the surroundings.

The coating product or mixture which upon being applied will comprise the layer (2) is obtained by means of mixing topsoil, slag, additives and cement, as raw materials. Thus, in figure 1 one can see a hopper (3) containing topsoil, a hopper (4) containing slag, a hopper (5) containing the additives and a hopper (6) containing cement, in such a way that these four hoppers unload onto a common conveyor belt (7) that conveys to a new conveyor belt (8) which in turn unloads the group of materials or products into a mill (9) from which the products comes out to a new conveyor belt (10) upon which a product comprised of small metal or plastic forks or crossheads, determining a more or less reticulated or interlaced fiber or structure unloaded simultaneously from a new hopper (11), in such a way that the mixture as a whole and by means of conveyor belt (10) is conveyed to a tank (12) in which the prepared mixture is stored, and from the tank it is then unloaded in situ as shown in figure 2, upon the proportioning hopper (13) that unloads in turn on a new conveyor belt (14) which takes the product to a guniting machine (15) from which the product is projected upon the slope to form the layer (2). The projecting is done through a nozzle (16) which the hose itself (17) has access to and a pipe (18) through which water is propelled towards the common nozzle (16) by means of a pump (19.)

## Claims

1. Method of organic-vegetal coating on surfaces without a fertile bed, which being applicable to slopes with a large gradient which goes from 45 to 90 degrees, irrespective of the geological constitution of the surface to be coated, and having the purpose of implanting hydro-sowing systems on surfaces without a vegetal covering, characterised in that it consists of projecting on the surface to be coated a homogeneous proportioned mixture of products forming a layer with capacity on the one hand, of being stable on a vertical wall, in thicknesses up to 50 mm and on the other hand with enough biotopical capacity to permit the growing of seeds to cover the cited surface; it being foreseen that the mixture of products includes:
- topsoil;
- slag with a calcium carbonate content higher than 10 % and with a granulometry between 12 and 20 mm.;
- Portland cement
- boulder stone with a granulometry less than 20 mm.;
- limey aggregate with a granulometry of 12 to 25 mm.;
- ground spongy resin with a granulometry of less than 8 mm.;
- cellulose pulp obtained from paper;
- reticulated or interlaced structure of metal or plastic material.

2. Method of organic-vegetal coating on surfaces without a fertile bed, , according to claim 1, characterised in that vegetal seeds are mixed with all the products.

3. Method of organic-vegetal coating on surfaces without a fertile bed, according to claim 2, characterised in that the vegetal seeds are spread around, said layer being formed upon the surface to be coated.

4. Method of organic-vegetal coating on surfaces without a fertile bed, according to one of the above claims, characterised in that on stratification planes perpendicular or convergent to the plane of the slope, for each 1,500 kg of topsoil, 1000 kg. of gravel and 200 kg. of ground spongy material, 160 kg. of cement are used, while in stratification planes coinciding with the slope or parallel to the same, a metal mesh of 12 mm. placed prior to projecting the coating and fastened to with bolts is put in place.

5. Method of organic-vegetal coating on surfaces without a fertile bed, according to the above claim, characterized in that in vertical slopes a double mesh separated by 20 mm. by means in interspaced bushing according to a reticulation of 1 x 1 and fastened to the slope by means of bolts is put in place, using 225 kg. of cement per each 1,500 kg of topsoil, 1000 kg. of gravel and 20 kg. of ground spongy material.

6. Mixture of organic-vegetal coating on surfaces without a fertile bed, characterised in that it comprises
- topsoil;
- slag with a calcium carbonate content higher than 10% and with a granulometry between 12 and 20 mm.;
- Portland cement;
- boulder stone with a granulometry less than 20 mm.,
- limey aggregate with a granulometry of 12 to 25 mm.;
- ground spongy resin material with a granulometry less than 8 mm.;
- cellulose pulp, obtained from paper;
- reticulated or interlaced structure of metal or plastic material.

## Patentansprüche

1. Verfahren zum Aufbringen einer organisch-vegetativen Schicht auf Flächen ohne fruchtbare Schicht, die stark geneigt sind, wobei der Steigungswinkel zwischen 45 und 90° liegt und wobei der geologische Aufbau der zu beschichtenden Flächen keine Rolle spielt, zu dem Zweck, an Flächen ohne vegetative Schicht Hydrosaat-Systeme einpflanzen zu können, **gekennzeichnet durch** das Aufbringen einer homogenen, in das richtige Verhältnis gebrachten Mischung von Produkten auf die zu beschichtende Fläche, die dort eine Schicht von bis zu 50 mm Dicke bildet und die einerseits in der Lage ist, stabil an einer vertikalen Wand zu haften, und die andererseits genügend Lebenskraft hat, um das Austreiben der Samen zu ermöglichen und die genannte Fläche abzudecken, wobei die Produktmischung folgende Bestandteile aufweist:
- Mutterboden,
- Schlacke mit einem Gehalt von Calcium-Karbonat, der größer ist als 10%, und mit einer Korngröße zwischen 12 und 20 mm,
- Portland-Zement,
- Steingeröll mit einer Korngröße unter 20 mm,
- kalkhaltige Zuschläge mit einer Korngröße zwischen 12 und 25 mm,
- gemahlenes, schwammiges Kunststoffmaterial mit einer Korngröße unter 8 mm,
- Zellulose-Pulpe aus Papier, und
- einer netzförmigen oder geflochtenen Struktur aus Metall oder Kunststoff.

2. Vefahren nach Anspruch 1, **dadurch gekennzeichnet**, daß die vegetativen Samen mit allen genannten Produkten gemischt sind.

3. Verfahren nach Anspruch 2, **dadurch gekennzeichnet**, daß die vegetativen Samen ausgebreitet oder verteilt sind, wobei diese Schicht auf der zu beschichtenden Fläche gebildet wird.

4. Verfahren nach einem der oben genannten Ansprüche, **dadurch gekennzeichnet**, daß bei Schichtungsebenen, die zur Neigungsebene senkrecht oder konvergierend verlaufen, auf jeweils 1.500 kg Mutterboden, 1.000 kg Steingeröll und 200 kg gemahlenes, schwammiges Kunststoffmaterial sowie 160 kg Zement verwendet werden, während für Schichtungsebenen, die mit der Neigung zusammenfallen oder zu ihr parallel verlaufen, ein Metallnetz von 12 mm vor dem Aufbringen der Beschichtung angebracht und mit Bolzen an Ort und Stelle befestigt wird.

5. Verfahren nach einem der oben genannten Ansprüche, **dadurch gekennzeichnet**, daß bei vertikalen Neigungen zwei Netze verwendet werden, die mit Hilfe von Abstandshaltern auf einem Abstand von 20 mm gehalten werden, entsprechend einem Netzwerk von 1 x 1, und die an der Neigung mit Hilfe von Bolzen befestigt sind, wobei auf jeweils 1.500 kg Mutterboden 225 kg Zement, 1.000 kg Steingeröll und 20 kg gemahlenes, schwammiges Kunststoffmaterial verwendet werden.

6. Mischung einer organisch-vegetativen Beschichtung auf Flächen ohne fruchtbare Schicht, **dadurch gekennzeichnet**, daß sie folgende Bestandteile aufweist:
- Mutterboden,
- Schlacke mit einem Gehalt von Calcium-Karbonat, der höher ist als 10%, und mit einer Korngröße zwischen 12 und 20 mm,
- Portland-Zement,
- Steingeröll mit einer Korngröße unter 20 mm,
- kalkhaltige Zuschläge mit einer Korngröße zwischen 12 und 25 mm,
- gemahlenes, schwammiges Kunststoffmaterial mit einer Korngröße unter 8 mm,
- Zellulose-Pulpe aus Papier, und
- eine netzförmige oder geflochtene Struktur aus Metall oder Kunststoff.

## Revendications

1. Méthode de production d'un revêtement organique végétal sur des surfaces dépourvues de lit fertile, applicable sur des pentes ayant une déclivité allant de 45 à 90 degrés, indépendamment de la constitution géologique de la surface à revêtir, et dont le but est l'implantation de systèmes d'hydro-ensemencement sur des surfaces sans revêtement végétal, caractérisé en ce qu'elle consiste à projeter sur la surface à revêtir un mélange proportionné de manière homogène de produits formant une couche ayant la capacité d'une part d'être stable sur un mur vertical sur des épaisseurs allant jusqu'à 50 mm et d'autre part d'avoir une capacité biotope suffisante pour permettre la croissance des semences devant recouvrir ladite surface; étant prévu que le mélange de produits comprend :
- de la terre végétale;
- des scories ayant une teneur en carbonate de calcium supérieur à 10 % et une granulométrie située entre 12 et 20 mm;
- du ciment Portland;
- des cailloux roulés ayant une granulométrie inférieure à 20 mm;
- des agrégats calcaires ayant une granulométrie de 12 à 25 mm;
- une résine spongieuse broyée ayant une granulométrie inférieure à 8 mm;
- de la pâte cellulosique obtenue à partir de papier;
- une structure réticulée ou entrelacée en matière plastique ou en métal.

2. Méthode de production d'un revêtement organique végétal sur des surfaces dépourvues de lit fertile selon la revendication 1, caractérisée en ce que les semences végétales sont mélangées avec tous les produits.

3. Méthode de production d'un revêtement organique végétal sur des surfaces dépourvues de lit fertile selon la revendication 2, caractérisée en ce que les semences végétales sont épandues, ladite couche étant formée sur la surface à revêtir.

4. Méthode de production d'un revêtement organique végétal sur des surfaces dépourvues de lit fertile selon l'une quelconque des revendications précédentes, caractérisée en ce que sur des plans de stratifications perpendiculaires ou convergents par rapport au plan de la pente, on utilise pour 1 500 kg de terre végétale, 1 000 kg de gravier et 200 kg de matériau spongieux broyé et 160 kg de ciment; tandis que sur des plans de stratification coïncidant avec la pente ou parallèle à celle-ci, ou met en place avant la projection du revêtement une grille métallique de 12 mm de maille, fixée à la pente à l'aide de boulons.

5. Méthode de production d'un revêtement organique végétal sur des surfaces dépourvues de lit fertile selon les revendications précédentes, caractérisée en ce que sur les pentes verticales, on met en place un double grillage ayant un intervalle de 20 mm au moyen de raccords espacés selon une réticulation de 1 X 1 fixé à la pente au moyen de boulons et on utilise pour 1 500 kg de terre végétale, 225 kg de ciment, 1 000 kg de graviers et 20 kg de matériau spongieux broyé.

6. Mélange pour former un revêtement végétal organique sur des surfaces dépourvues de lit fertile et caractérisé en ce qu'il comprend:
- de la terre végétale;
- des scories ayant une teneur en carbonate de calcium supérieur à 10 % et une granulométrie située entre 12 et 20 mm;
- du ciment portland;
- des cailloux roulés ayant une granulométrie inférieure à 20 mm;
- des agrégats calcaires ayant une granulométrie de 12 à 25 mm;
- une résine spongieuse broyée ayant une granulométrie inférieure à 8 mm;
- de la pâte cellulosique obtenue à partir de papier;
- une structure réticulée ou entrelacée en matière plastiquer ou en métal.
